# EUROPÄISCHE PATENTSCHRIFT

(11) **EP 2 838 758 B1**
(45) Veröffentlichungstag und Bekanntmachung des Hinweises auf die Patenterteilung: **07.11.2018**
(21) Anmeldenummer: 13719058.3
(22) Anmeldetag: 19.04.2013
(51) Int. Cl.: B60N 2/90, B60N 2/20, B60N 2/22

(54) **FAHRZEUGSITZ MIT EINEM RECLINER**
VEHICLE SEAT WITH A RECLINER
SIÈGE DE VÉHICULE POURVU D'UN SYSTÈME D'INCLINAISON

(30) Priorität: 20.04.2012 DE 102012007768; 21.06.2012 DE 102012012201
(43) Veröffentlichungstag der Anmeldung: 25.02.2015
(73) Patentinhaber: Adient Luxembourg Holding S.à r.l., 1855 Luxembourg (LU)
(72) Erfinder: LINNENBRINK, Jörg, 42327 Wuppertal (DE); KIENKE, Ingo, 42929 Wermelskirchen (DE); ROTHSTEIN, Gerhard, 42553 Velbert (DE)
(74) Vertreter: Wolff, Felix
(86) Internationale Anmeldenummer: PCT/EP2013/058164
(87) Internationale Veröffentlichungsnummer: WO 2013/156593

(56) Entgegenhaltungen:
- DE-A1-102007 013 521
- US-A- 5 435 624

## Beschreibung

Die vorliegende Erfindung betrifft einen Fahrzeugsitz mit einem Sitzteil und einer Rückenlehne, wobei die Rückenlehne mittels eines Recliners schwenkbar zu dem Sitzteil vorgesehen ist (siehe z.B. US 5 435 624 A, dem Oberbegriff entsprechend). Derartige Fahrzeugsitze sind aus dem Stand der Technik hinlänglich bekannt (siehe u.a. DE 10 2007 013 521 bzw. US 5 435 624 A). Die Rückenlehne wird dabei manuell oder motorisch in ihrer Lage relativ zu dem Sitzteil verdreht und in der jeweils gewünschten Position arretiert. Die Fahrzeugsitze des Standes der Technik weisen jedoch, insbesondere bezüglich der Kraft- und/oder Momentübertragung von der Rückenlehne auf das Sitzteil, Nachteile auf.

Es war deshalb die Aufgabe der vorliegenden Erfindung, einen Fahrzeugsitz zur Verfügung zu stellen, der die Nachteile des Standes der Technik nicht aufweist.

Gelöst wird die Aufgabe mit einem durch die technischen Merkmale des unabhängigen Anspruchs 1 definierten Fahrzeugsitz, der ein Sitzteil aufweist, an dem und/oder relativ zu dem eine Rückenlehne um eine Drehachse drehbar angeordnet ist, wobei die Rückenlehne mit einem Recliner verstellt und/oder in ihrer jeweiligen Position, vorzugsweise an dem Sitzteil, verriegelbar ist, wobei der Recliner ein Form- und/oder Kraftschlussmittel aufweist, das form- und/oder kraftschlüssig mit einem Antriebs- und/oder Verriegelungselement zusammenwirkt, und die Drehachse des Antriebs- und/oder Verriegelungselementes in einem Winkel zu der Drehachse der Rückenlehne vorgesehen ist.

Die vorliegende Erfindung betrifft einen Fahrzeugsitz, der ein Sitzteil aufweist. Dieses Sitzteil ist in der Regel mit der Karosserie des Fahrzeuges, insbesondere längsverschieblich, verbunden. An dem Sitzteil oder an der Karosserie des Fahrzeuges ist eine Rückenlehne angeordnet, die in ihrem Neigungswinkel um eine Drehachse, die vorzugsweise an dem Sitzteil oder an der Karosserie des Fahrzeuges vorgesehen ist, beispielsweise zu Komfort- und/oder Easy-Entry-Zwecken, verstellt werden kann. Die Rückenlehne kann dabei mittels eines Recliners verstellt und/oder in der jeweils gewünschten Position verriegelt werden. Dafür weist der Recliner vorzugsweise einen Recliner-Beschlag mit einem Form- und/oder Kraftschlussmittel in Form einer Verzahnung, auf. Der Recliner-Beschlag kann fest oder drehbar an dem Sitzteil oder der Karosserie angeordnet sein. Erfindungsgemäß ist an der Rückenlehne ein Antriebs- und/oder Verriegelungselement vorgesehen, das ebenfalls ein Form- und/oder Kraftschlussmittel aufweist, das mit den Form- und/oder Kraftschlussmitteln des Recliner-Beschlages form- und/oder kraftschlüssig kämmend zusammenwirkt und dadurch die Rückenlehne verstellt und/oder in ihrer jeweils gewünschten Position fixiert. Erfindungsgemäß ist das Antriebs- und/oder Verriegelungselement drehbar vorgesehen, wobei seine Drehachse in einem Winkel, insbesondere einem rechten Winkel, zu der Drehachse der Rückenlehne vorgesehen ist, d. h. die Drehachsen verlaufen nicht parallel.

Gemäß einem bevorzugten Gegenstand der vorliegenden Erfindung ist das Antriebs- und/oder Verriegelungselement ein Schneckenrad.

Vorzugsweise ist das Schneckenrad mit mehreren Form- und/oder Kraftschlussmitteln, insbesondere Zähnen eines Recliner-Beschlages in Eingriff, insbesondere um die Rückenlehne relativ zu dem Sitzteil zu verriegeln.

Vorzugsweise ist das Schneckenrad einstückig mit einer Welle und/oder einem weiteren Zahnrad vorgesehen.

Die Verstellung der Rückenlehne relativ zu dem Sitzteil kann kontinuierlich oder diskontinuierlich erfolgen.

Vorzugsweise ist das Schneckenrad auf einer Seite abgeflacht. Diese Ausführungsform ist insbesondere für eine diskontinuierliche Verstellung der Rückenlehne von Vorteil.

Erfindungsgemäß ist das Antriebs- und/oder Verriegelungselement drehbar an der Rückenlehne vorgesehen. Dabei kann das Antriebs- und/oder Verriegelungselement direkt oder indirekt an der Rückenlehne gelagert sein. Beispielsweise ist die Rückenlehne fest mit einem Ende eines Hebelarms verbunden, dessen anderes Ende drehbar an dem Sitzteil oder der Karosserie des Fahrzeuges angeordnet ist. Vorzugsweise ist das Antriebs- und/oder Verriegelungselement drehbar an dem Hebelarm vorgesehen.

Vorzugsweise weist der Recliner einen Recliner-Beschlag auf, der besonders bevorzugt als Kreissektor ausgeführt ist und der noch mehr bevorzugt an seinem äußeren Ende ein kreissegmentförmig vorgesehenes Form- und/oder Kraftschlussmittel in Form einer Verzahnung aufweist. Vorzugsweise ist der Recliner-Beschlag drehbar an dem Sitzteil angeordnet, wobei der Recliner-Beschlag vorzugsweise in bestimmten Drehwinkel-Positionen an dem Sitzteil mit einem Verriegelungsmittel arretiert werden kann. Vorzugsweise ist die Drehachse des Recliner-Beschlages identisch mit der Drehachse der Rückenlehne.

Der Antrieb des Antriebs- und/oder Verriegelungselements kann motorisch und/oder manuell erfolgen. Vorzugsweise ist der Antrieb selbsthemmend vorgesehen, so dass sich die Rückenlehne nicht selbsttätig verstellt. Zwischen dem Antrieb und dem Antriebs- und/oder Verriegelungselement kann ein Getriebe angeordnet sein. Dieses Getriebe kann ebenfalls selbsthemmend ausgeführt sein. Erfindungsgemäß handelt es sich bei dem Getriebe um ein Kegelradgetriebe.

Der Recliner-Beschlag und/oder das Antriebs- und/oder Verriegelungselement können aus jedem beliebigen, dem Fachmann geläufigen Werkstoff hergestellt werden. Vorzugsweise wird als Werkstoff Metall und/oder Kunststoff oder ein sonstiger Leichtbauwerkstoff verwendet. Insbesondere die Schnecke kann aus Kunstsoff gefertigt sein, wodurch beispielsweise das Gewicht und/oder die Schallentwicklung des Fahrzeugsitzes vermindert wird.

Vorzugsweise sind alle Antriebe, Getriebe und/oder Antriebsmittel selbsthemmend vorgesehen.

Als Antriebsmittel für das Schneckenrad kann jeder Antrieb verwendet werden. Beispielhaft sei ein Riementrieb oder ein Zahnrad-/Kegelradantrieb genannt.

Ein zur vorliegenden Erfindung nicht gehörender Gegenstand ist ein Verstellmechanismus zur

Verstellung eines ersten Elementes relativ zu einem zweiten Element mit einem Schneckenrad, wobei ein Teilsegment der Schnecke abgeflacht ist und bei dem die Schnecke einen Verriegelungs-/Entriegelungsmechanismus aufweist, der das Schneckenrad linear und rotatorisch antreibt.

Letzterer Gegenstand betrifft einen Verstellmechanismus, insbesondere einen Verstellmechanismus in einem Kraftfahrzeug, beispielsweise um die Neigung der Rückenlehne relativ zu dem Sitzteil eines Fahrzeugsitzes zu verstellen und/oder um die einen Fahrzeugsitz in Längsrichtung zu verstellen.

Der Verstellmechanismus weist ein erstes Element, beispielsweise die Rückenlehne eines Fahrzeugsitzes auf, das relativ zu einem zweiten Element, beispielsweise dem Sitzteil eines Fahrzeugsitzes verstellt wird. Ein Schneckenrad dient zur Verriegelung des ersten Teils an dem zweiten Teil in der jeweils gewünschten Relativstellung. Ein Element weist dafür eine Verzahnung auf, mit der die Schnecke zusammenwirkt. Das Schneckenrad ist zumindest in einem Teilbereich seines Umfangs so abgeflacht, dass in diesem Bereich die Schnecke nicht kraft- und/oder formschlüssig mit der Verzahnung zusammenwirken kann. In dieser Stellung des Schneckenrades relativ zu der Verzahnung kann das erste Teil relativ zu dem zweiten Teil verstellt werden. Sobald das Schneckenrad so gedreht wird, dass die Schnecke im Eingriff mit der Verzahnung ist, sind die beiden Teile relativ zueinander verriegelt.

Der Verstellmechanismus weist nun einen Verriegelungs-/Entriegelungsmechanismus auf, der das Schneckenrad linear und rotatorisch antreibt.

Vorzugsweise weist das Schneckenrad, insbesondere einstückig, ein Gewinde mit einer vergleichsweise großen Steigung auf, zumindest mit einer Steigung, die größer ist als die Steigung der Windungen des Schneckenrades. Besonders bevorzugt ist am Umfang dieses Gewindes ein linear verschiebliches Element vorgesehen, das ein korrespondierendes Gewinde aufweist.

Vorzugsweise ist das Schneckenrad drehbar und längsverschieblich auf einer Achse vorgesehen.

Besonders bevorzugt wirkt das Schneckenrad mit einem Federmittel zusammen, das das Schneckenrad in eine Richtung vorspannt. Besonders bevorzugt ist das Federmittel zwischen der Achse und dem Schneckenrad angeordnet und bewirkt bei seiner Entspannung eine Linearbewegung des Schneckenrades.

Vorzugsweise weist das Schneckenrad an einem Teilsegment seines Umfangs eine Aussparung und/oder Abflachung auf, in dem die Flanken des Schneckenrades zumindest teilweise entfernt sind. Der Radbereich dieser Aussparung ist vorzugsweise so gestaltet, dass ein Eingriff der verbleibenden Flanken in das korrespondierende Zahnrad erleichtert wird. Beispielsweise kann der Querschnitt der Flanken im Randbereich angeschrägt sein und/oder die Flanken können abgerundet sein, um einen eindrehenden Eingriff der Flanken des Schnekenrades in das korrespondierende Zahnrad zu erleichtern.

Im Folgenden wird die Erfindung anhand der Figuren 1 - 8b erläutert. Diese Erläuterungen sind lediglich beispielhaft und schränken den allgemeinen Erfindungsgedanken nicht ein.
- Figur 1: zeigt den erfindungsgemäßen Fahrzeugsitz.
- Figur 2: zeigt Details des Recliners.
- Figur 3: zeigt ein Verriegelungselement zur diskontinuierlichen Verstellung der Rückenlehne.
- Figur 4: zeigt den Antrieb des Verriegelungselementes gemäß Figur 3.
- Figur 5: zeigt ein Antriebs- und/oder Verriegelungselement zur kontinuierlichen Verstellung der Rückenlehne.
- Figuren 6a - c: zeigen die Easy-Entry-Verstellung der Rückenlehne.
- Figur 7: zeigt die Verstellung der Rückenlehne in die Verstaustellung.
- Figuren 8 a und b: zeigen einen Verstellmechanismus.

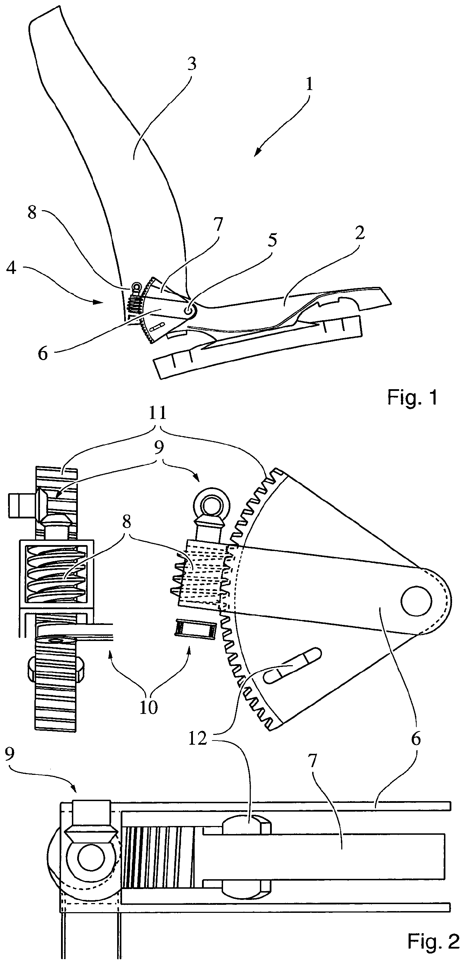

Figur 1 zeigt den erfindungsgemäßen Fahrzeugsitz, der ein Sitzteil 2 aufweist, das in der Regel an der Karosserie des Fahrzeuges, insbesondere längsverschieblich, befestigt ist. Der Fachmann versteht, dass das Sitzteil 2 jedoch auch Teil der Karosserie sein kann. An dem Sitzteil 2 ist die Rückenlehne 3 um eine Drehachse 5 drehbar angeordnet. Die Drehlagerung der Rückenlehne erfolgt mittels eines Dreharms 6, dessen eines Ende drehfest mit der Rückenlehne und dessen anderes Ende drehbar um die Drehachse 5 vorgesehen ist. Die Rückenlehne 3 kann zu Komfort- und/oder Easy-Entry-Zwecken in ihrem Winkel relativ zu dem Sitzteil verstellt und in der jeweils gewünschten Position arretiert werden. Dafür weist der erfindungsgemäße Fahrzeugsitz einen Recliner 4 auf, mit dem die Rückenlehne 3 verstellt und/oder in der jeweils gewünschten Position fixiert werden kann. Der Recliner 4 besteht in dem vorliegenden Fall aus einem Recliner-Beschlag 7, insbesondere einem Recliner-Sektor, der in dem vorliegenden Fall beweglich zu dem Sitzteil, insbesondere um die Drehachse 5 drehbar, vorgesehen ist. Der Recliner-Beschlag 7 weist an seinem äußeren Umfang ein Form- und/oder Kraftschlussmittel 7 in Form einer Verzahnung 11 auf. An der Rückenlehne, insbesondere an dem Dreharm 6, ist drehbar ein zu dem Form- und/oder Kraftschlussmittel 11 komplementäres Antriebs- und/oder Verriegelungselement 8 vorgesehen, das mit dem Form- und/oder Kraftschlussmittel 11 form- und/oder kraftschlüssig zusammenwirkt. Dadurch kann die Rückenlehne in ihrer Winkelstellung relativ zu dem Sitzteil verstellt und/oder in der jeweiligen Position fixiert werden. Vorzugsweise ist das Antriebs- und/oder Verriegelungselement 8 ein Schneckenrad. Vorzugsweise ist die Drehachse des Antriebs- und/oder Verriegelungselementes 8 in einem rechten Winkel zu der Drehachse 5 der Rückenlehne vorgesehen.

Figur 2 zeigt Details des Recliners 4. Das Antriebs- und/oder Verriegelungselement 8, in dem vorliegenden Fall ein Schneckenrad, ist mit einem Getriebe 9 verbunden, in dem vorliegenden Fall ein Kegelradgetriebe, und wird dadurch rotatorisch angetrieben. Als alternativer Antrieb ist noch ein Riementrieb 10 dargestellt, der das Schneckenrad ebenfalls rotierend antreibt. Während seiner Drehung kämmt das Schneckenrad 8 mit der Verzahnung 11 des Recliner-Beschlages und bewegt sich dadurch entlang des äußeren Umfangs des Recliner-Beschlages und nimmt dabei den Hebelarm 6 und folglich die Rückenlehne mit, so dass sich diese in ihrem Winkel relativ zu dem Sitzteil verändert. Bei der hier dargestellten Verstellung der Rückenlehne handelt es sich um eine sogenannte kontinuierliche Verstellung. Wenn sich das Antriebs- und/oder Verriegelungselement 8 nicht dreht, fixiert es die Rückenlehne in ihrer jeweiligen Stellung relativ zu dem Recliner-Beschlag 7. Vorzugsweise sind das Schneckenrad 8, das Kegelrad und die sie verbindende Welle einstückig vorgesehen.

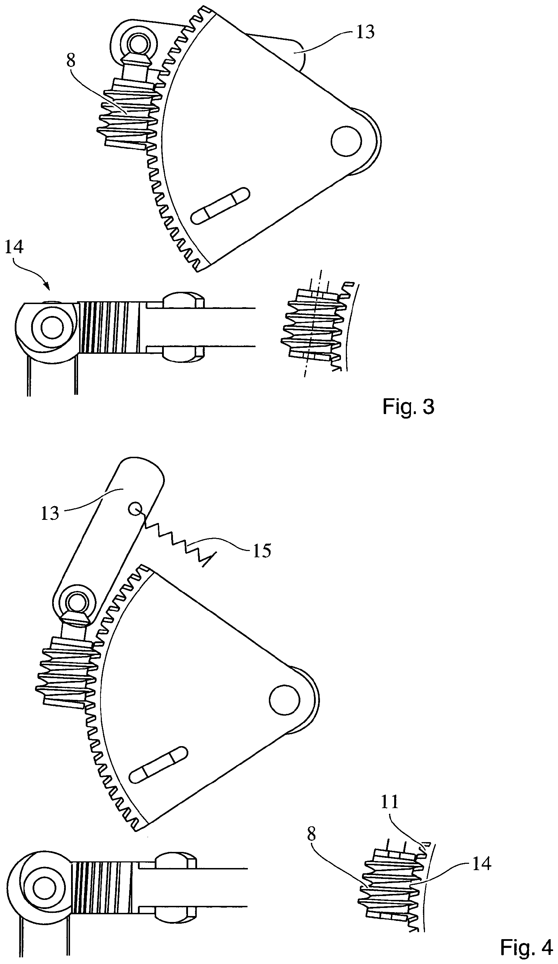

In Figur 3 ist eine Ausführungsform des Recliners des erfindungsgemäßen Fahrzeugsitzes dargestellt, der eine diskontinuierliche Verstellung der Rückenlehne erlaubt. In dem vorliegenden Fall ist das Verriegelungselement 8 mit einer Abflachung 14 versehen. Die Drehung des Verriegelungselementes 8 erfolgt in dem vorliegenden Fall mit einem Hebel 13, dessen Drehbewegung, hier über ein Kegelradgetriebe, an das Verriegelungselement 8 weitergeleitet wird. Mit dem Hebel 13 wird das Verriegelungselement 8, in dem vorliegenden Fall wiederum ein Schneckenrad, von seiner verriegelnden Stellung, in der das Kraft- und/oder Formschlussmittel des Verriegelungselementes 8 mit der Verzahnung 11 des Recliner-Beschlages in Eingriff ist, in eine entriegelnde Stellung, in der die Abflachung 14 der Verzahnung 11 gegenüberliegt, gedreht und umgekehrt.

Figur 4 zeigt den Recliner in seiner entriegelten Stellung. Der Hebel 13 wurde gegen den Uhrzeigersinn gedreht, wodurch sich das Verriegelungselement 8 ebenfalls soweit gedreht hat, dass es nicht mehr im Eingriff mit der Verzahnung 11 des Recliner-Beschlages steht. Dadurch kann die Rückenlehne, beispielsweise manuell, in die jeweils gewünschte Lage verstellt werden. Sobald diese Stellung erreicht ist, lässt der Sitzinsasse den Hebel 13 los, wodurch dieser durch die Vorspannung der Feder 15 im Uhrzeigersinn gedreht wird. Diese Drehung wird wiederum auf das Verriegelungselement 8 übertragen, wodurch dessen Form- und/oder Kraftschlussmittel wieder in Eingriff mit der Verzahnung 11 gelangt und somit die Rückenlehne in der gewünschten Position fixiert. Der Fachmann versteht, dass der Drehantrieb des Verriegelungselementes 8 auch durch jeden anderen, beliebigen Antrieb erfolgen kann.

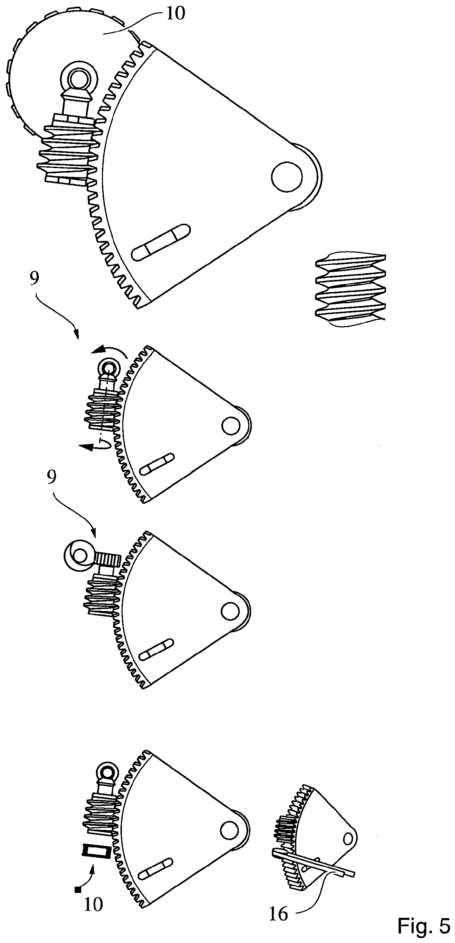

In Figur 5 ist ein Recliner für eine kontinuierliche Verstellung der Rückenlehne dargestellt. In dem vorliegenden Fall weist der erfindungsgemäße Fahrzeugsitz einen Antrieb 10, hier ein Handrad 10, auf, dessen Drehbewegung mittels eines Getriebes, hier eines Kegelradgetriebes, auf das Antriebs- und/oder Verriegelungselement 8 übertragen wird. Bei dieser Drehung kämmt das Antriebs- und/oder Verriegelungselement 8 mit der Verzahnung 11 des Recliner-Beschlages und bewegt sich dadurch entlang des äußeren Umfangs des Recliner-Beschlages und nimmt dabei die Rückenlehne mit. Im unteren Teil der Figur 5 sind unterschiedliche Antriebsformen dargestellt, die jeweils eine kontinuierliche Verstellung der Rückenlehne erlauben. Bei der Darstellung ganz links handelt es sich um einen Kegelradantrieb. In der mittleren Darstellung ist ein Schneckenradantrieb dargestellt. Bei der Ausführungsform gemäß der rechten Darstellung wird das Antriebs- und Verriegelungselement 8 durch einen Riemen 16 angetrieben. Das jeweils benötigte Drehmoment kann manuell oder motorisch zur Verfügung gestellt werden.

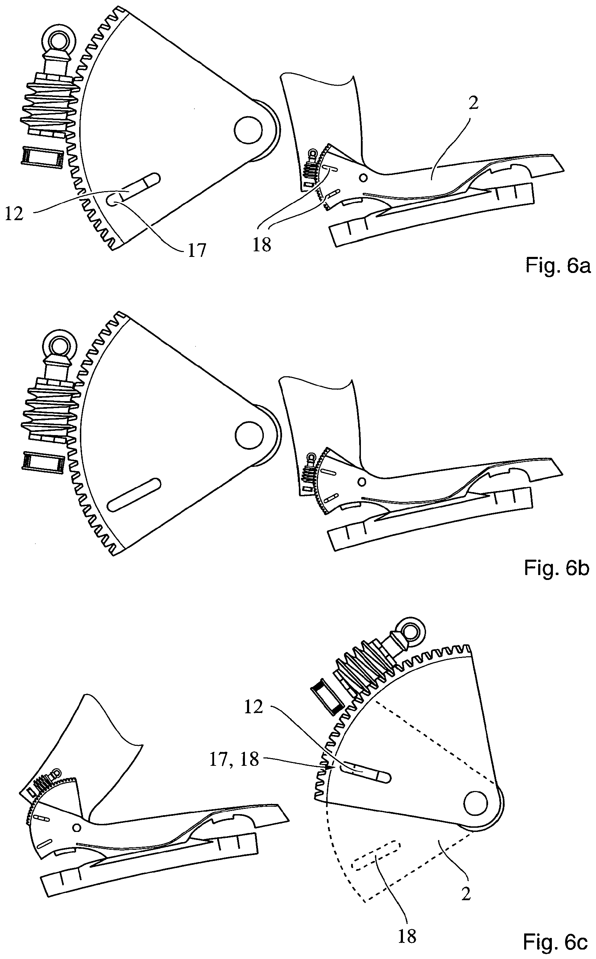

In den Figuren 6a bis 6c ist die Verstellung der Rückenlehne von der Gebrauchs- in die Easy-Entry-Stellung dargestellt. Ausgehend von der Gebrauchsposition (Figur 6a) ist der Recliner-Beschlag 7 an dem Sitzteil 2 verriegelt. Dafür ist an dem Recliner-Beschlag 7 ein Verriegelungselement 12 vorgesehen, das in dem vorliegenden Fall in einer Ausnehmung 17 in dem Recliner-Beschlag 7 angeordnet ist. Zur Verriegelung greift dieses Verriegelungselement 12 in eine Ausnehmung 18 in dem Seitenteil 2 ein.

Soll nun die Rückenlehne in ihre Easy-Entry-Stellung überführt werden, wird das Verriegelungselement 12 entriegelt, d. h. aus der Ausnehmung 18 entfernt, so dass sich der Recliner-Beschlag 7 frei relativ zu dem Sitzteil 2 um die Drehachse 5 drehen kann (vergleiche Figur 6b).

Die Easy-Entry-Stellung ist in Figur 6c dargestellt. Sobald die Rückenlehne diese Stellung erreicht hat, greift das Verriegelungselement 12 wieder in eine Ausnehmung 18 in dem Seitenteil 2 ein und verriegelt dadurch die Rückenlehne in der Easy-Entry-Stellung.

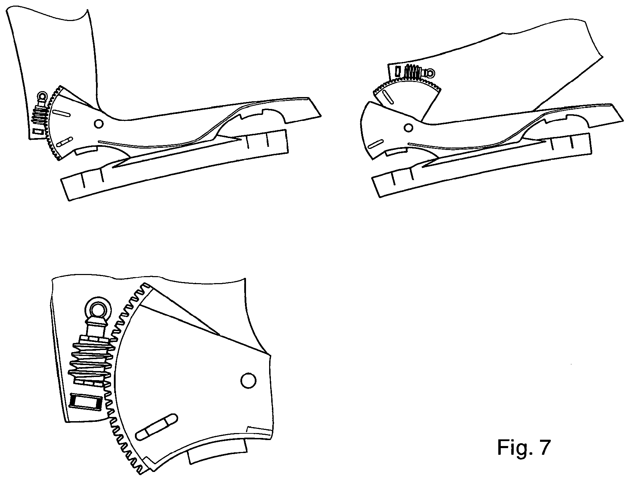

Eine Überführung der Rückenlehne in die sogenannte Verstaustellung ist in Figur 7 dargestellt. Ausgehend von der Easy-Entry-Stellung, wird das Verriegelungselement 12 wiederum entriegelt und die Rückenlehne wird weiter im Uhrzeigersinn verdreht, bis sie die Verstaustellung erreicht hat.

Der Fachmann versteht, dass eine Entkopplung des Schneckenrades und der korrespondierenden Verzahnung auch durch eine Relativbewegung zwischen Schneckenrad und Zahnrad erfolgen kann. Beispielsweise kann das Schneckenrad relativ zu der Verzahnung gedreht und/oder linear werden. Die Bewegung kann dabei senkrecht von der Verzahnung weg und/oder parallel zu der Verzahnung erfolgen.

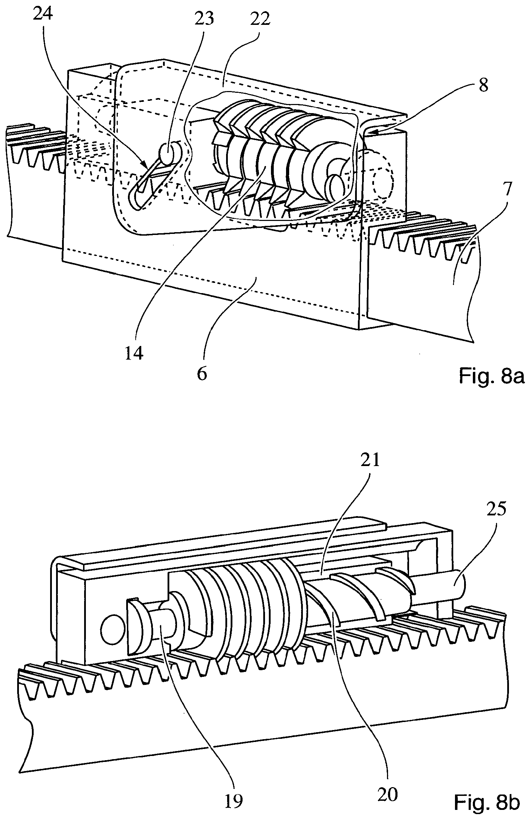

Figuren 8a und 8b zeigen den nicht zur Erfindung gehörenden Verstellmechanismus. Der Verstellmechanismus weist ein erstes Element 6, beispielsweise die Rückenlehne eines Fahrzeugsitzes auf, das relativ zu einem zweiten Element 7, beispielsweise dem Sitzteil eines Fahrzeugsitzes verstellt wird. Ein Schneckenrad 8 dient zur Verriegelung des ersten Teils 6 an dem zweiten Teil 7 in der jeweils gewünschten Relativstellung. Ein Element 7 weist dafür eine Verzahnung auf, mit der die Schnecke 8 verriegelnd zusammenwirkt. Das Schneckenrad 8 ist zumindest in einem Teilbereich 14 seines Umfangs so abgeflacht und/oder ausgespart, dass in diesem Bereich die Schnecke 8 nicht kraft- und/oder formschlüssig mit der Verzahnung des Elementes 7 zusammenwirken kann. In dieser Stellung des Schneckenrades relativ zu der Verzahnung kann das erste Teil 6 relativ zu dem zweiten Teil 7 verstellt werden. Sobald das Schneckenrad so gedreht wird, dass die Schnecke im Eingriff mit der Verzahnung ist, sind die beiden Teile relativ zueinander verriegelt. Die Schnecke 8 ist auf einer Achse 25 drehbar und längsverschieblich gelagert. Vorzugsweise weist der Verstellmechanismus einen Bereich 19 auf, in dem ein Federmittel (nicht dargestellt) vorgesehen ist, das bei einer Längsbewegung des Schneckenrades zusammengedrückt bzw. entspannt wird. Vorzugsweise ist/sind mindestens ein, vorzugsweise beide Randbereiche der Abflachung/Aussparung so gestaltet, dass der Wiedereingriff der Flanken des Schneckenrades in die korrespondierende Verzahnung, hier durch Rotation des Schneckenrades, erleichtert wird.

Figuren 8a und 8b zeigen das Schneckenrad 8 jeweils in seinem verriegelten Zustand. Zur Entriegelung wird ein Hebel 22 hier gegen den Uhrzeigersinn gedreht. Dieser Hebel 22 weist ein Langloch 23 auf, in das ein Stift oder eine Ausbuchtung 23 eingreift, die mit einer Mutter 21 verbunden ist. Durch die Drehung des Hebels 22 wird die Mutter linear, in Figur 8a nach rechts bewegt. Der Hebel kann manuell oder motorisch angetrieben werden. Die Mutter weist eine Ausnehmung auf, die mit einem Innengewinde mit einer großen Steigung versehen ist. Dieses Innengewinde wirkt mit einer Schraube 20 zusammen, die vorzugsweise einstückig mit dem Schneckenrad 8 verbunden ist. Die Linearbewegung der Mutter 21 dreht die Schraube 20 und damit das Schneckenrad 8 so lange, bis die Windungen der Schnecke 8 nicht mehr im Eingriff mit der Verzahnung des zweiten Teils 7 sind. Danach wird die Schnecke 8, vorzugsweise gegen die Kraft eines Federmittels in Richtung eines Anschlags geschoben. Die Mutter 21 hält die Schnecke 8 in dieser Stellung. Der Verstellmechanismus ist jetzt entriegelt und das erste Element 6 kann relativ zu dem zweiten Element 7 bewegt werden.

Sobald die gewünschte Relativstellung der beiden Elemente 6, 7 erreicht worden ist, müssen die beiden Elemente relativ zueinander wieder verriegelt werden. Dafür wird der Hebel 22 wieder in die in den Figuren 8a, b dargestellte Stellung verbracht. Dadurch wird die Mutter 21 linear bewegt und nimmt dabei das Schneckenrad 8 mit und versucht es zu drehen. Solange die Windungen des Schneckenrades sich jedoch auf den Zähnen des zweiten Elementes 7 aufliegen, ist eine solche Drehung nicht möglich und das Schraubenrad wird lediglich linear entlang des zweiten Elementes bewegt. Sobald die Windungen der Schnecke 8 sich mit Lücken zwischen den Zähnen des Elementes 7 überdecken, beginnt das Schneckenrad sich zu drehen und die Flanken des Schneckenrades greifen zwischen die Zähne des zweiten Elementes 8 ein und die beiden Elemente 6, 7 sind relativ zueinander verriegelt. Die Bewegung des Schneckenrades wird vorzugsweise durch ein Federmittel unterstützt. Der Hebel kann in die Stellung, in der das Schneckenrad verriegelnd in die korrespondierende Stellung eingreift, vorgespannt sein. Die Ver- bzw. Entriegelung kann gleichermaßen motorisch oder manuell mit demselben Aufbau verwirklicht werden. Dadurch wird die benötigte Teilezahl vermindert.

### Bezugszeichenliste:

- 1: Fahrzeugsitz
- 2: Sitzteil
- 3: Rückenlehne
- 4: Verstellmechanismus, Recliner
- 5: Drehpunkt, Drehachse
- 6: erstes Element, Dreharm
- 7: zweites Teil, ortsfestes Teil, Recliner-Beschlag, Recliner-Sektor
- 8: Antriebs-, Verriegelungselement, Schneckenrad, Schneckenradantrieb
- 9: Getriebe
- 10: Antrieb, Handrad, Motor, Riementrieb
- 11: Form- und/oder Kraftschlussmittel, Zähne
- 12: Easy-Entry-Verriegelung
- 13: Antrieb, Hebel
- 14: Abflachung
- 15: Vorspannmittel
- 16: Riemen, Zahnriemen
- 17: Ausnehmung, Schlitz in dem Recliner-Beschlag 7
- 18: Ausnehmung, Schlitz in dem Sitzteil 2
- 19: Bereich eines Federmittels
- 20: Schraube mit großer Steigung
- 21: Mutter
- 22: Hebel
- 23: Stift
- 24: Langloch
- 25: Achse

## Patentansprüche

1. Fahrzeugsitz (1), der ein Sitzteil (2) aufweist, an dem und/oder relativ zu dem eine Rückenlehne (3) um eine Drehachse (5) drehbar angeordnet ist, wobei die Rückenlehne (3) mit einem Rechner (4) verstellt und/oder in ihrer jeweiligen Position, vorzugsweise an dem Sitzteil (2), verriegelbar ist, wobei der Recliner (4) einen Recliner-Beschlag (7) mit einem Form- und/oder Kraftschlussmittel in Form einer Verzahnung (11)
aufweist, das form- und/oder kraftschlüssig mit einem Antriebs- und/oder Verriegelungselement (8) zusammenwirkt, wobei das Antriebs- und/oder Verriegelungselement (8) drehbar mit der Rückenlehne (3) verbunden ist, wobei eine Drehachse des Antriebs- und/oder Verriegelungselementes (8) in einem Winkel zu der Drehachse (5) der Rückenlehne (3) vorgesehen ist, **dadurch gekennzeichnet, dass** der Fahrzeugsitz (1) ferner einen Antrieb (10) aufweist, dessen Drehbewegung mittels eines Kegelradgetriebes (9) oder eines Riementriebs (10, 16)
auf das Antriebs- und/oder Verriegelungselement (8) übertragbar ist, wobei das Antriebs- und/oder Verriegelungselement (8) dazu ausgebildet ist, bei dieser Drehung mit der Verzahnung (11) des Recliner-Beschlages (7) form- und/oder kraftschlüssig
zu kämmen und sich dadurch entlang des äußeren Umfangs des Recliner-Beschlages (7) zu bewegen und dabei die Rückenlehne (3) mitzunehmen.

2. Fahrzeugsitz (1) nach Anspruch 1, **dadurch gekennzeichnet, dass** das Antriebs- und/oder Verriegelungselement (8) ein Schneckenrad umfasst.

3. Fahrzeugsitz (1) nach einem der voranstehenden Ansprüche , **dadurch gekennzeichnet, dass** der Recliner-Beschlag (7) als Kreissektor ausgeführt ist.

4. Fahrzeugsitz (1) nach Anspruch 3, **dadurch gekennzeichnet, dass** der Recliner-Beschlag (7) drehbar, insbesondere an dem Sitzteil (2), gelagert ist.

5. Fahrzeugsitz (1) nach Anspruch 4, **dadurch gekennzeichnet, dass** die Drehachse des Recliner-Beschlages (7) und die Drehachse der Rückenlehne (3) identisch ist.

6. Fahrzeugsitz (1) nach einem der Ansprüche 4 oder 5, **dadurch gekennzeichnet, dass** er eine Verriegelung (12) aufweist, die den Recliner-Beschlag (7) drehfest an dem Sitzteil (2) verriegelt.

7. Fahrzeugsitz (1) nach einem der voranstehenden Ansprüche, **dadurch gekennzeichnet, dass** die Drehachse des Antriebs- und/oder Verriegelungselementes (8) in einem rechten Winkel zu der Drehachse (5) der Rückenlehne (3) vorgesehen ist.

8. Fahrzeugsitz (1) nach einem der voranstehenden Ansprüche, **dadurch gekennzeichnet, dass** die Verstellung der Rückenlehne (3) kontinuierlich oder diskontinuierlich erfolgt.

## Claims

1. Vehicle seat (1) which has a seat part (2) on which and/or relative to which a backrest (3) is arranged so as to be rotatable about a rotational axis (5), wherein the backrest (3) is adjusted by means of a recliner (4) and/or is able to be locked in its respective position, preferably on the seat part (2), wherein the recliner (4) has a recliner fitting (7) with a positive and/or non-positive connecting means in the form of a toothing (11) which cooperates positively and/or non-positively with a drive element and/or locking element (8), wherein the drive element and/or locking element (8) is connected rotatably to the backrest (3), wherein a rotational axis of the drive element and/or locking element (8) is provided at an angle to the rotational axis (5) of the backrest (3), **characterized in that** the vehicle seat (1) also has a drive (10), the rotational movement of which is transmissible by means of a bevel gear mechanism (9) or of a belt drive (10, 16) to the drive element and/or locking element (8), wherein the drive element and/or locking element (8) is configured to mesh positively and/or non-positively with the toothing (11) of the recliner fitting (7) during this rotation and as a result to move along the outer periphery of the recliner fitting (7) and at the same time drive the backrest (3).

2. Vehicle seat (1) according to Claim 1, **characterized in that** the drive element and/or locking element (8) comprises a worm gear.

3. Vehicle seat (1) according to one of the preceding claims, **characterized in that** the recliner fitting (7) is configured as a circular sector.

4. Vehicle seat (1) according to Claim 3, **characterized in that** the recliner fitting (7) is rotatably mounted, in particular on the seat part (2) .

5. Vehicle seat (1) according to Claim 4, **characterized in that** the rotational axis of the recliner fitting (7) and the rotational axis of the backrest (3) are identical.

6. Vehicle seat (1) according to one of Claims 4 or 5, **characterized in that** it has a locking system (12) which locks the recliner fitting (7) fixedly in terms of rotation to the seat part (2).

7. Vehicle seat (1) according to one of the preceding claims, **characterized in that** the rotational axis of the drive element and/or locking element (8) is provided at a right angle to the rotational axis (5) of the backrest (3).

8. Vehicle seat (1) according to one of the preceding claims, **characterized in that** the adjustment of the backrest (3) takes place continuously or discontinuously.

## Revendications

1. Siège de véhicule (1), lequel comprend une partie d'assise (2) sur laquelle et/ou par rapport à laquelle un dossier (3) est disposé de manière rotative autour d'un axe de rotation (5), le dossier (3) étant réglé à l'aide d'un système d'inclinaison (4) et/ou pouvant être verrouillé dans sa position respective, de préférence sur la partie d'assise (2), le système d'inclinaison (4) comprenant une ferrure de système d'inclinaison (7) dotée d'un moyen d'engagement par complémentarité de forme et/ou par force sous la forme d'une denture (11), lequel coopère par complémentarité de forme et/ou par force avec un élément d'entraînement et/ou de verrouillage (8), l'élément d'entraînement et/ou de verrouillage (8) étant relié au dossier (3) de manière rotative, un axe de rotation de l'élément d'entraînement et/ou de verrouillage (8) étant prévu suivant un angle par rapport à l'axe de rotation (5) du dossier (3), **caractérisé en ce que** le siège de véhicule (1) comprend en outre un entraînement (10) dont le mouvement de rotation peut être transmis à l'élément d'entraînement et/ou de verrouillage (8) au moyen d'une transmission à pignons coniques (9) ou d'une transmission par courroie (10, 16), l'élément d'entraînement et/ou de verrouillage (8) étant conçu pour s'engrener par complémentarité de forme et/ou par force avec la denture (11) de la ferrure de système d'inclinaison (7) lors de cette rotation et pour se déplacer de ce fait le long de la périphérie extérieure de la ferrure de système d'inclinaison (7) et pour entraîner ainsi le dossier (3).

2. Siège de véhicule (1) selon la revendication 1, **caractérisé en ce que** l'élément d'entraînement et/ou de verrouillage (8) comporte une roue hélicoïdale.

3. Siège de véhicule (1) selon l'une quelconque des revendications précédentes, **caractérisé en ce que** la ferrure de système d'inclinaison (7) est réalisée sous forme de secteur de cercle.

4. Siège de véhicule (1) selon la revendication 3, **caractérisé en ce que** la ferrure de système d'inclinaison (7) est montée de manière rotative, en particulier sur la partie d'assise (2).

5. Siège de véhicule (1) selon la revendication 4, **caractérisé en ce que** l'axe de rotation de la ferrure de système d'inclinaison (7) et l'axe de rotation du dossier (3) sont identiques.

6. Siège de véhicule (1) selon la revendication 4 ou 5, **caractérisé en ce qu'**il comprend un verrouillage (12) qui verrouille la ferrure de système d'inclinaison (7) de manière bloquée en rotation sur la partie d'assise (2).

7. Siège de véhicule (1) selon l'une quelconque des revendications précédentes, **caractérisé en ce que** l'axe de rotation de l'élément d'entraînement et/ou de verrouillage (8) est prévu à angle droit par rapport à l'axe de rotation (5) du dossier (3) .

8. Siège de véhicule (1) selon l'une quelconque des revendications précédentes, **caractérisé en ce que** le réglage du dossier (3) s'effectue de manière continue ou discontinue.
